Europäisches Patentamt

European Patent Office

Office européen des brevets

(19)

(11) EP 1 519 533 A1

(12) EUROPEAN PATENT APPLICATION

(43) Date of publication:
30.03.2005 Bulletin 2005/13

(51) Int Cl.⁷: H04L 29/06, H04L 12/56

(21) Application number: 04255222.4

(22) Date of filing: 27.08.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 26.09.2003 US 672918

(71) Applicant: Agilent Technologies, Inc.
Palo Alto, CA 94306 (US)
(72) Inventors:
• McCollom, William G.
Fort Collins, CO 80525 (US)
• Kanevsky, Valery
San Lorenzo, CA 94580 (US)
• Tudor, Alexander L.
Mountain View, CA 94043 (US)

(74) Representative: Exell, Jonathan Mark et al
Williams Powell
Morley House
26-30 Holborn Viaduct
London EC1A 2BP (GB)

(54) **Method and system for controlling egress traffic load balancing between multiple service providers**

(57)    A system and method are provided for managing allocation of egress traffic load from a content provider 302 among a plurality of service providers. Load balancing between a plurality of service providers used by a content provider may be performed based on analysis of traffic volume, rather than just some round robin or random scheme. A system is provided that comprises a content provider communicatively coupled to a plurality of service providers that provide access to a communication network 301. The system further comprises an egress traffic manager 304 operable to determine, based at least in part on traffic volume of each of the plurality of service providers, an optimal balance of the content provider's egress traffic to be routed to each of the plurality of service providers.

FIG. 3

EP 1 519 533 A1

**Description**

TECHNICAL FIELD

The present invention relates in general to routing of data within communication networks, and more specifically to systems and methods for balancing egress traffic load from a content provider between a plurality of service providers available for use by the content provider for optimal performance.

BACKGROUND OF THE INVENTION

In general, communication networks (e.g., computer networks) comprise multiple nodes (e.g., computers) that are communicatively interconnected for communication with each other. A network may include only a few nodes physically located close together (e.g., it may include subnetworks and/or local area networks (LANs)) and/or it may include many nodes dispersed over a wide area (e.g., a wide area network (WAN)). Increases in traffic and capacity constraints on existing switches within traditional circuit-switched networks have prompted the development of packet-based networks, and in particular, Internet-Protocol (IP) networks. A typical IP network employs a plurality of routing devices ("routers"), such as those manufactured by Cisco Systems, Inc. ("Cisco"), Ascend Communications, Bay Networks and Newbridge, among others, to route data packets representing a call or other connection independently from an origin to a destination based on a destination address in each packet. Today, examples of the most prevalent routing techniques in IP networks are the Open Shortest Path First(OSPF) protocol and Border Gateway Protocol (BGP). In essence, routers are specialized computer networking devices that route or guide packets of digitized information throughout a network. Routers, therefore, perform a complex and critical role in network operations.

Since management of a large system of interconnected computer networks can prove burdensome, smaller groups of computer networks may be maintained as autonomous systems (ASs) or routing domains. The networks within a routing domain are typically coupled together by conventional "intradomain" routers. To increase the number of nodes capable of exchanging data, "interdomain" routers executing interdomain routing protocols are used to interconnect nodes of the various routing domains. An example of an interdomain routing protocol is BGP, which performs routing between ASs by exchanging routing and reachability information among interdomain routers of the systems. Interdomain routers configured to execute the BGP protocol, called BGP routers, maintain routing tables, transmit routing. update messages, and render routing decisions based on routing metrics.

Each BGP router maintains a routing table (related to BGP) that lists all feasible paths to a particular network. BGP peer routers residing in the ASs exchange routing information under certain circumstances. Incremental updates to the routing table are generally performed. For example, when a BGP router initially connects to the network, the peer routers may exchange the entire contents of their routing tables. Thereafter when changes occur to those contents, the routers exchange only those portions of their routing tables that change in order to update their peers' tables. The BGP routing protocol is well-known and described in further detail in "Request For Comments (RFC) 1771," by Y. Rekhter and T. Li (1995), and "Interconnections, Bridges and Routers," by R. Perlman, published by Addison Wesley Publishing Company, at pages 323-329 (1992), the disclosures of which are hereby incorporated herein by reference.

More specifically, routers generally maintain forwarding tables that include a prefix (i.e., an IP address and mask), a next hop IP address, and other routing parameters. The forwarding tables are generated via BGP or other routing protocols. Information from which routers derive the forwarding tables typically includes additional information about the potential path of the routed traffic, such as the destination AS number (known as the terminating AS) and a list of intermediate AS numbers that the traffic traverses in order to reach the destination AS.

Internet service providers that use routers can use tools provided by router vendors to analyze data traffic routed by the routers. The data traffic analysis can be based on counters maintained by the routers. The counters can be aggregated into data flow counts, which are totals of the number of bytes of data traffic observed between two internet protocol entities. The aggregated data flow counts permit a determination to be made of how much traffic was relayed via a particular protocol between any two locations. The router usually relays these data flow counters to another system for storage and/or analysis. An example of such a system is a Cisco router that has NETFLOW capabilities that are enabled and that streams data flow information to another system. The system runs a process that stores and aggregates the data flow for later analysis. The information provided by a NETFLOW analysis merely provides data traffic volumes for a particular traffic destination. Users of the NETFLOW analysis cannot determine, for example, the intermediate networks on which the data traffic traveled. The NETFLOW users can only determine where the data traffic terminated.

The availability of content (e.g., information, such as a website or other application) on demand is of critical importance for many enterprises (e.g., enterprises that conduct business via their websites). It is possible to enhance the availability and fault-tolerance of an enterprise's provision of content by providing the enterprise with redundant points of service to a communication network (e.g., the Internet) in order to ensure that the failure of any individual part of the network does not prevent the network, as a whole, from delivering the enterprise's content (e.g., the enterprise's website). For instance, many content providers on the World Wide Web ("the web") utilize a plurality of Internet service providers to enable them redundant connections to the Internet for serving their content to clients.

When a plurality of service providers are used by a content provider, any of various approaches may be implemented by the content provider for using such service providers. One approach that may be used makes no attempt whatsoever to leverage the redundant service providers so as to decrease the response time of each service provider under load. Instead, one service provider may be used for servicing clients, while an alternate service provider is held in reserve and exists solely to provide fault-tolerant content provision. While this approach provides a reliable backup for the content provider, it is an inefficient technique for servicing client requests. Redundant resources of the backup service provider which are idle bring no benefit other than increasing the odds that the content provider can tolerate the failure of a its other service provider.

Other prior art techniques do attempt to leverage the resources of the multiple service providers. One example of such a technique may be referred to as "early binding." Content requestors (clients) are statically assigned instances of service provision. For example, all clients in a first geographic region may be assigned to be serviced by a first service provider, while all clients in a second geographic region may be assigned to be serviced by a second service provider. Of course, clients may be pre-assigned based on criteria other than or in addition to their geographic locations. A major shortcoming of this "early binding" approach stems from the static assignment of a content requestor (client) and a service provider. This method is not able to adjust to any shifts in the load (e.g., the number of client requests being serviced by the content provider via each service provider) or state of the service providers. For instance, the allocation of requests to the service providers cannot respond to varying loads of each service provider. If a community of content requestors (clients) is very active, the system does not spread the demands across all available service providers. Rather, only those providers statically assigned to the requestors are used to process the workload (the egress traffic flow for serving the requested content) created by the incoming requests.

Another existing technique for leveraging redundant resources may be referred to as "late binding." Content requestors (clients) of a content provider are dynamically assigned to a given service provider. Thus, the system dynamically decides which of the plurality of service providers used by the content provider should process a given client request. This decision may be made by employing such known strategies as Round Robin and Random Assignment. With the Round Robin technique, incoming client requests to a content provider are each assigned to one of a list of candidate service providers of the content provider. Selection of candidates is determined by the order of the candidates on the list. Each service provider receives a service request in turn. Thus, this technique attempts to balance the load of servicing requests through assigning requests to the service providers in a round robin fashion. The Random Assignment method is similar to the Round Robin method, except that the list of candidate service providers has no particular order. Assignment of service requests is drawn from the list of candidate service providers of a content provider at random.

It should be recognized that the Round Robin and Random Assignment strategies make the assignment of service providers to be used for serving egress traffic (content) from a content provider to requesting clients using a blind algorithm. They do not take into consideration the demand or load on each service provider, for example.

BRIEF SUMMARY OF THE INVENTION

The present invention is directed to a system and method for managing allocation of egress traffic load from a content provider among a plurality of service providers. Certain embodiments of the present invention perform load balancing between a plurality of service providers used by a content provider based on analysis of traffic volume, rather than just some round robin or random scheme. For instance, certain embodiments utilize per-prefix utilization data collected for each service provider, as well as router interface utilization data collected from the content provider's router(s), to determine an optimal allocation of egress traffic to each of its plurality of service providers. Thus, certain embodiments of the present invention provide a means for automatic and optimal control of egress link per-prefix allocation for a content provider using a plurality of service providers for accessing a communication network, thus achieving both load-balancing and redundancy without infrastructure reconfiguration and in response to dynamic network traffic encountered.

According to at least one embodiment, a system is provided that comprises a content provider communicatively coupled to a plurality of service providers that provide access to a communication network. The system further comprises an egress traffic manager operable to determine, based at least in part on traffic volume of each of the plurality of service providers, an optimal balance of the content provider's egress traffic to be routed to each of the plurality of service providers.

According to at least one embodiment, a method comprises using a plurality of service providers for providing a content provider access to a communication network, wherein the content provider communicates its egress traffic to clients via the plurality of service providers. The method further comprises collecting traffic volume data for each service provider, and determining, based at least in part on the collected traffic volume data, whether to change an allocation of egress traffic from the content provider among the plurality of service providers.

According to at least one embodiment, an egress traffic manager is provided that comprises a means for determining, for each interface from a content provider to a plurality of service providers, outbound volume destined for each of a plurality of different Internet Protocol (IP) prefixes. The egress traffic manager further comprises a means for determining, based at least in part on the outbound volume destined for each IP prefix, whether to reallocate an amount of the outbound traffic from the content provider among the plurality of service providers.

According to at least one embodiment, an egress traffic manager comprises at least one data collector module for collecting data reflecting volume of egress traffic routed by at least one router from a content provider to each of a plurality of service providers that provide access to a communication network. The egress traffic manager further comprises a decision maker module for determining, based at least in part on the collected data, whether a routing strategy of the at least one router should be updated to change the allocation of the egress traffic among the plurality of service providers.

According to at least one embodiment, a method comprises implementing at least one content provider router for routing egress traffic from a content provider. The content provider router(s) have at least one interface to each of a plurality of service providers that provide the content provider access to a communication network, and the content provider router(s) include a routing table from which it determines which of the plurality of service providers to route the content provider's egress traffic. The method further comprises monitoring the volume of egress traffic directed from the content provider router(s) to each of the plurality of service providers, and determining whether the volume of egress traffic from the content provider router(s) to any one of the plurality of service providers exceeds a corresponding threshold. If determined that the volume of egress traffic to one of the plurality of service providers exceeds its corresponding threshold, the routing table of the content provider router(s) is updated to reallocate the content provider's egress traffic between the plurality of service providers.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed maybe readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

BRIEF DESCRIPTION OF THE DRAWINGS

For a more complete understanding of the present invention, reference is now made to. the following descriptions taken in conjunction with the accompanying drawing, in which:

FIGURE 1 shows a schematic block diagram of a typical computer network with which embodiments of the present invention may be utilized;

FIGURE 2 shows a schematic block diagram of a typical interdomain router, such as a BGP router;

FIGURE 3 shows an example system implementing an embodiment of the present invention;

FIGURE 4 shows an example block schematic of an egress traffic manager for a content provider in accordance with one embodiment of the present invention;

FIGURE 5 shows an example flow diagram for managing allocation of egress traffic from a content provider between a plurality of its service providers in accordance with an embodiment of the present invention;

FIGURE 6 shows an example operational flow diagram for an egress traffic manager in accordance with one embodiment of the present invention; and

FIGURE 7 shows an example computer system on which an embodiment of the present invention may be implemented.

DETAILED DESCRIPTION OF THE INVENTION

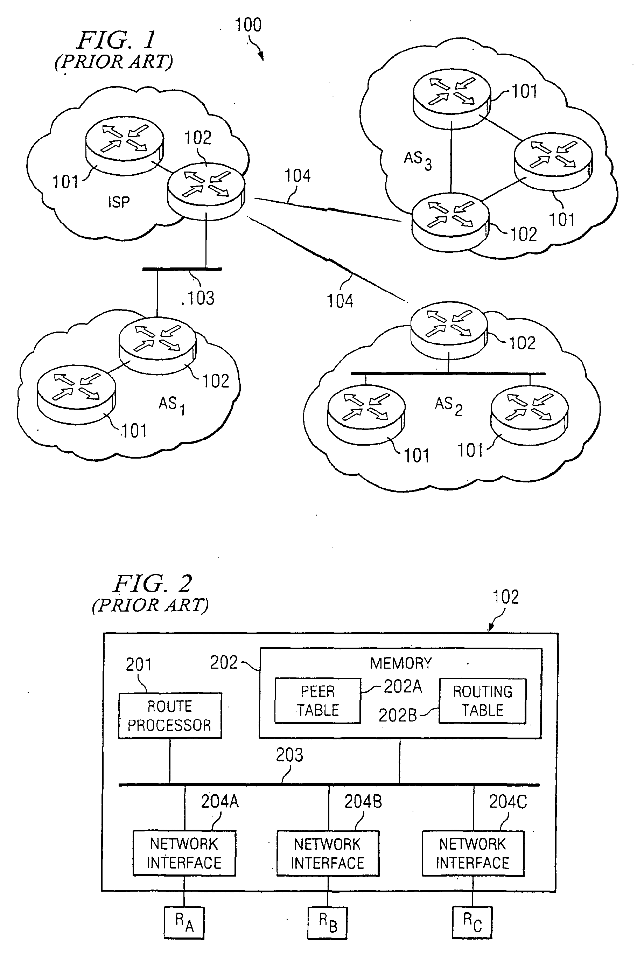

FIGURE 1 shows a schematic block diagram of a typical computer network 100 with which embodiments of the present invention may be utilized. Computer network 100 comprises a plurality of autonomous systems ("ASs") or routing domains interconnected by intermediate nodes, such as conventional intradomain routers 101 and interdomain routers 102. As shown in the example of FIGURE 1, the ASs may include an Internet Service Provider (ISP) domain and various routing domains (AS$_1$, AS$_2$, and AS$_3$) interconnected by interdomain routers 102. As described further hereafter, certain content providers (not shown) may be communicatively coupled to a plurality of different ones of such ISP domains.

Interdomain routers 102 may be further interconnected by shared medium networks 103, such as Local Area Networks (LANs), and point-to-point links 104, such as frame relay links, asynchronous transfer mode links or other serial links. As is well-known, communication among the routers is typically effected by exchanging discrete data frames or packets in accordance with predefined protocols, such as the Transmission Control Protocol/Internet Protocol (TCP/IP). Routers 101 and 102 may comprise BGP routers, for example. As is well known, BGP is an Exterior Gateway Protocol (EGP) that is commonly used for routers within the Internet, for example.

Each router typically comprises a plurality of interconnected elements, such as a processor, a memory and a network interface adapter. FIGURE 2 shows a schematic block diagram of a typical interdomain router 102 comprising a route processor 201 coupled to a memory 202 and a plurality of network interface adapters 204A, 204B, and 204C via a bus 203. Network interfaces 204A-204C are coupled to external interdomain routers R$_{A-C}$. Memory 202 may comprise storage locations addressable by processor 201 and interface adapters 204A-204C for storing software programs and data structures, as is well-known in the art. For example, memory 202 may store data structures such as BGP peer table 202A and routing (or "forwarding") table 202B.

Route processor 201 may comprise processing elements or logic for executing the software programs and manipulating the data structures. Generally, an operating system (OS), portions of which are typically resident in memory 202 and executed by route processor 201, functionally organizes the router by, *inter alia,* invoking network operations in support of software processes executing on the router. It will be apparent to those skilled in the art that other processor and memory means, including various computer-readable media, may be used within router 102 for storing and executing program instructions.

As is well-known in the art, in order to perform routing operations in accordance with the BGP protocol, each interdomain router 102 generally maintains a BGP table 202A that identifies the router's peer routers and a routing table 202B that lists all feasible paths to a particular network. The routers further exchange routing information using routing update messages when their routing tables change. The routing update messages are generated by an updating (sender) router to advertise optimal paths to each of its neighboring peer (receiver) routers throughout the computer network. These routing updates allow the BGP routers of the ASs to construct a consistent and up-to-date view of the network topology. While an example BGP router 102 is shown in FIGURE 2, other types of routers now known or later developed may be used in conjunction with certain embodiments of the present invention, as those of ordinary skill in the art will appreciate.

BGP, and particularly version 4 of BGP ("BGP4"), is the prevalent method of linking content providers (leaf autonomous systems) to their service providers and the rest of the Internet. Many content providers may employ two or more service providers depending on their respective size and organizational geography. Multiple service providers are often used to achieve some degree of load-balancing and redundancy. These goals are typically achieved by extensive planning and are expressed in the form of the participating routers' BGP configuration.

A router's forwarding technique usually determines what type of load balancing it can perform. For example, router load-balancing techniques for Cisco are summarized in table 1 below, which is representative for other router manufacturers as well.

TABLE 1

| Technique | Process Switching | Fast Switching | CEF |
|---|---|---|---|
| per packet | Yes | No | Yes |
| per destination | No | Yes | No |
| per flow (netflow) | No | Yes | Yes |
| per source/destination | No | No | Yes |

The packet forwarding technique of a router is generally of three basic types: (a) packet forwarding requires a process switch (process switching), (b) packet forwarding is resolved in the interrupt handler (fast switch), or (c) packet forwarding involves proprietary software techniques and hardware support, such as Cisco Express Forwarding (CEF). Four load-balancing techniques are available: 1) per packet technique, 2) per destination technique, 3) per flow (netflow) technique, and 4) per source/destination technique. All four load-balancing techniques are available, independent of routing protocol. Table 1 above identifies which load-balancing techniques may be implemented with each of the packet forwarding techniques. For instance, a router using process switching or CEF packet forwarding techniques may provide per packet load balancing, while a router using the fast switching packet forwarding technique may provide per destination load balancing.

Thus, as described above, routers may be configured to provide a degree of load balancing. In addition, when using BGP, the four load-balancing techniques identified above can be used for load balancing in two configurations: 1) single BGP sessions across multiple physical links, and 2) multiple BGP sessions across multiple physical links.

A major drawback of traditional BGP load-balancing, however, is that it can only be applied to a single service provider. For instance, some degree of load-balancing between ASs may be achieved with BGP by configuring the BGP routers such that there are several paths that traffic may be routed to a particular destination IP address. However, that sort of BGP load-balancing can only be performed for a single service provider. In other words, for a single service provider giving that particular destination IP address, it may be able to take a couple of different routes but still with that single service provider. So, this type of BGP load-balancing fails to take advantage of the additional bandwidth that is available to a content provider having a plurality of service providers.

Thus, in a worst-case BGP router configuration for a content provider using multiple, redundant service providers, one or more redundant service provider link(s) is/are not used unless the primary link fails. Thus, essentially no load-balancing occurs, but rather the additional service providers are held in reserve in the event of a failure of the primary service provider. Frequently, a content provider may inadvertently load-balance amongst its multiple service providers according to the BGP algorithm that chooses the best (often shortest) path for a given prefix. By allowing BGP to choose some prefixes from each provider a combination of load-balancing and redundancy is achieved.

A "prefix" as used herein is well-known to those of ordinary skill in the art, and thus is only briefly described hereafter. As is well-known, every computer that communicates over the Internet is assigned an Internet Protocol ("IP") address that uniquely identifies the device and distinguishes it from other computers on the Internet. An IP address has 32 bits, often shown as 4 octets of numbers from 0-255 represented in decimal form instead of binary form. Each 32-bit IP address includes two subaddresses, one identifying the network and the other identifying the host to the network, with an imaginary boundary separating the two. The location of the boundary between the network and host portions of an IP address is determined through the use of a *subnet mask.* A subnet mask is another 32-bit binary number, which acts like a filter when it is applied to the 32-bit IP address. By comparing a subnet mask with an IP address, systems can determine which portion of the IP address relates to the network, and which portion relates to the host. Anywhere the subnet mask has a bit set to "1", the underlying bit in the IP address is part of the network address, and anywhere the subnet mask is set to "0", the related bit in the IP address is part of the host address. In the modern networking environment defined by RFC 1519 "Classless Inter-Domain Routing (CIDR)", the subnet mask of a network is typically annotated in written form as a "slash prefix" that trails the network number. For instance, an IP address maybe written as 10.0.0.0/8, which is an address 10.0.0.0 having a subnet mask (or prefix) of 8. It should be understood that the slash prefix annotation is generally used for human benefit, and infrastructure devices typically use the 32-bit binary subnet mask internally to identify networks and their routes.

As mentioned above, various techniques for performing load balancing are available in the prior art. However, those techniques fail to balance traffic between a plurality of service providers available to a content provider based on analysis of the traffic, but instead use some technique such as a round robin or random assignment scheme for selecting a service provider for serving requested content.

Further, traditional load-balancing techniques fail to evaluate how well each service provider is serving the content provider's egress traffic for making load-balancing decisions. In some instances, one service provider may be doing a better job of serving up the content provider's egress traffic than other service providers. Typical load balancers, such as those using round robin or random assignment schemes, distribute the content provider's egress traffic evenly between its service providers regardless of how well each service provider is serving the traffic. For example, one service provider may be very heavily loaded with a load of traffic (e.g., from various different content providers), while another service provider may be much less loaded. Typical load-balancing techniques fail to consider the load (or "volume of traffic") of each service provider, but instead distribute egress (or "outbound") traffic from the content provider to each service provider evenly even though the traffic may be better served by the service provider currently having the smaller load.

As described further below, embodiments of the present invention provide a system and method for managing allocation of egress traffic load from a content provider between a plurality of service providers. Embodiments of the present invention perform load balancing between a plurality of service providers used by a content provider based on analysis of traffic volume, rather than just some round robin or random scheme.

Certain embodiments of the present invention utilize per-prefix utilization data collected for each service provider, as well as router interface utilization data collected from the content provider's router(s), to determine an optimal allocation of egress traffic to each of its plurality of service providers. In certain embodiments, an algorithm is provided for optimization of multiple service provider egress traffic load balancing based on the following constraints: (a) per-link utilization rate, (b) prefix link switching frequency, and (c) number of switched prefixes. A prefix is switched when the control mechanism (described below) changes its egress link (e.g., from one service provider to another). Certain embodiments may also consider other factors, in addition to or instead of the above constraints, such as prefix stability and link performance in making the switching decision.

For example, in certain embodiments, an analysis of how traffic is being loaded or distributed to a service provider (e.g., the volume of traffic loaded to a service provider) may be obtained as described in co-pending and commonly assigned U.S. Patent Application Serial Number 2003//0120769 titled "METHOD AND SYSTEM FOR DETERMINING AUTONOMOUS SYSTEM TRANSIT VOLUMES" filed December 7, 2001, the disclosure of which is hereby incorporated herein by reference. An egress traffic manager may be implemented for a content provider to use such analysis of the traffic volume of each service provider to decide how best to balance the content provider's egress traffic at any given time. Thus, the content provider's egress traffic may be optimally balanced between its different service providers to achieve the best performance in serving its content to its clients. Certain embodiments of the present invention provide an egress traffic manager that does not require any special-purpose hardware for its implementations, but rather takes advantage of the hardware in place (e.g., using the BGP routing protocol) for dynamically balancing egress traffic from the content provider among its service providers.

Thus, embodiments of the present invention provide a means for automatic and optimal control of egress link per-prefix allocation for a content provider using a plurality of service providers for accessing a communication network, thus achieving both load-balancing and redundancy without infrastructure reconfiguration and in response to dynamic network traffic dynamics. Embodiments of the present invention may be applied independent of switching related load-balancing techniques (such as those implemented within a router) or protocols, since it operates above the OSI network layer. For instance, certain embodiments may collect data from the OSI network layer and use that data in the OSI application layer to control routing.

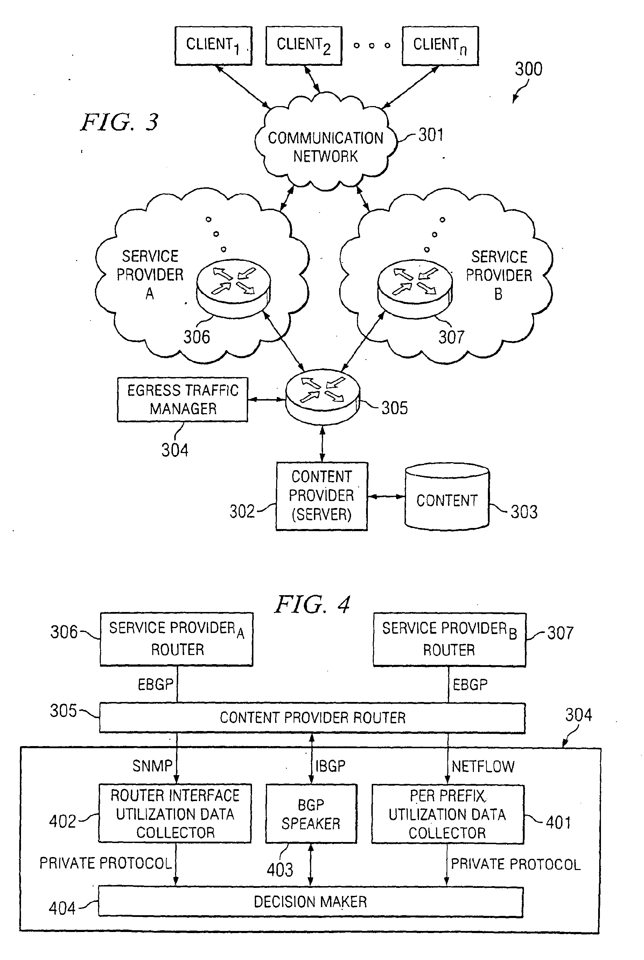

FIGURE 3 shows an example system 300 in which an embodiment of the present invention is implemented. More specifically, example system 300 includes a plurality of clients $Client_1$, $Client_2$, ..., $Client_n$ that are communicatively coupled to communication network 301. Each of clients $Client_1$, $Client_2$, ..., $Client_n$ may be any type of processor-based device capable of at least temporarily communicatively coupling to communication network 301, including as examples a personal computer (PC), laptop computer, handheld computer (e.g., personal data assistant (PDA)), mobile telephone, etc. Communication network 301 may comprise the Internet (or other WAN), public (or private) telephone network, a wireless network, cable network, a local area network (LAN), any communication network now known or later developed, and/or any combination thereof.

Content provider 302 is also communicatively coupled to communication network 301. In this example, content provider 302 has access to communication network 301 via a plurality of service providers, such as Service $Provider_A$ and Service $Provider_B$. For instance, example service providers that provide access to the Internet include Sprint, AT&T, UUNET Wholesale Network Services, Level 3 Communications, Cable and Wireless, and Qwest Communications. Content provider 302 may comprise any suitable processor-based device capable of serving content to clients via communication network 301, such as a server computer. Content provider 302 is communicatively coupled to data storage 303 having content stored thereto. Data storage 303 may be internal or external to content provider 302, and may include any suitable type of device for storing data, including without limitation memory (e.g., random access memory (RAM)), optical disc, floppy disk, etc. Content provider 302 is operable to serve content, such as the content from data storage 303, to clients, such as $Client_l$-$Client_n$, via communication network 301. As an example of system 300, content provider 302 may comprise a web server that serves content (e.g., a website) to requesting clients $Client_l$-$Client_n$, via communication network (e.g., the Internet) 301.

As described further below, embodiments of the present invention provide egress traffic management logic (or "egress traffic manager") 304 that is operable to manage the routing of outbound content from content provider 302 to requesting clients via Service $Provider_A$ and Service $Provider_B$. For instance, egress traffic manager 304 is operable to optimally balance the load of egress traffic being served from content provider 302 between its plurality of service providers, such as Service $Provider_A$ and Service $Provider_B$ in the example of FIGURE 3.

Service $Provider_A$ and Service $Provider_B$ may each include one or more routers (e.g., BGP routers), such as routers 306 and 307 respectively, for communicatively coupling content provider 302 to communication network 301. Further, content provider 302 may include one or more routers 305 (e.g., BGP router) for routing its egress traffic to Service $Provider_A$ and Service $Provider_B$, as shown. In accordance with management of egress traffic by manager 304, router(s) 305 may selectively route outbound content for servicing certain client requests to Service $Provider_A$ (via router 306) and outbound content for servicing certain other client requests to Service $Provider_B$ (via router 307). As described further below, egress traffic manager 304 updates the router for the egress traffic from content provider 302 based, at least in part, on analysis of all the traffic.

FIGURE 4 shows an example block schematic of egress traffic manager 304 in accordance with one embodiment of the present invention. As shown, this example implementation of egress traffic manager 304 includes Per-Prefix Utilization Data Collector 401, Router Interface Utilization Data Collector 402, BGP Speaker 403, and Decision Maker 404. Each of Per-Prefix Utilization Data Collector 401, Router Interface Utilization Data Collector 402, BGP Speaker 403, and Decision Maker 404 may be implemented in software, hardware, or a combination thereof to provide their respective functionalities described further below. Also, while shown as separate components for ease of explanation in FIGURE 4, one or more of the components of egress traffic manager 304 may be combined in their implementations (e.g., in common software and/or hardware) in certain embodiments.

In the example embodiment of FIGURE 4, content provider router(s) 305 comprise router(s) running the BGP4 protocol and supporting Netflow (or similar tool for providing data flow information). BGP speaker 403 is a routing manager such as Zebra (a well known open source implementation, see wwwl.zebra.org) which receives BGP updates, manages the routes and sends updates to the content provider routers 305 according to the policies it is instructed to follow. The egress traffic manager 304 further includes one or more data collection hosts, such as Per-Prefix Utilization Data Collector 401 and Router Interface Utilization Data Collector 402. Per-Prefix Utilization Data Collector 401 collects such information as traffic volume for each prefix. Per-Prefix Utilization Data Collector 401 may, for example, be implemented in accordance with the teaching of co-pending and commonly assigned U.S. Patent Application Serial Number 2003/0120769 titled "METHOD AND SYSTEM FOR DETERMINING AUTONOMOUS SYSTEM TRANSIT VOLUMES" filed December 7, 2001, the disclosure of which is hereby incorporated herein by reference.

As an example scenario, suppose content provider router 305 is linked to two service providers, Service Provider$_A$ and Service Provider$_B$, as shown in FIGURE 4. Full Internet routing tables are obtained by router 305 via Exterior BGP ("EBGP") from Service Provider$_A$'s router 306 and from Service Provider$_B$'s router 307, as shown in FIGURE 4. A separate (and not shown) module may program Decision Maker Module 404 with control parameters. As an example, such control parameters may specify that when the Service Provider$_A$ link is at 70% utilization rate, the routing is changed to route overflow traffic to Service Provider$_B$. Various other control parameters may be implemented instead of or in addition to this example parameter. For instance, the control parameter may further specify that overflow egress traffic is to be routed to Service Provider$_B$ when the Service Provider$_A$ link is at 70% utilization rate only if the Service Provider$_B$ link is below 70% utilization rate.

Netflow (or similar tool for providing data flow information) is configured to export traffic matrix data to Per Prefix Utilization Data Collector Module 401. The collected traffic matrix data is processed by Per Prefix Utilization Data Collector Module 401 to determine the outbound volume contributed by each prefix on each interface (e.g., via the interface to Service Provider$_A$ and the interface to Service Provider$_B$). Data identifying the determined outbound volume contributed by each prefix on each interface is then transmitted to Decision Maker Module 404. Router Interface Utilization Data Collector Module 402 periodically polls content provider router 305 for interface utilization information that is also transmitted to the Decision Maker Module 404.

Based on the information received from the Data Collector Modules 401 and 402, the Decision Maker Module 404 determines whether outbound traffic (e.g., for a particular prefix) is to be re-balanced between Service Provider$_A$ and Service Provider$_B$ (e.g., to shift certain outbound traffic from one of the service provider links to the other). For example, suppose that prefix 10.0.0.0/8 is associated with a group of clients (an AS) that are requesting traffic from the content provider (e.g., content provider 302 of FIGURE 3). It is understood that both Service Provider$_A$ and Service Provider$_B$ provide a route to prefix 10.0.0.0/8 in this example, e.g., via routers 306 and 307 respectively. Decision Maker Module 404 may determine from the received information that: (a) Service Provider$_A$ is at 70% utilization, and (b) prefix 10.0.0.0/8 contributed 30% of the outbound traffic on Service Provider$_A$'s link. For instance, the Service Provider$_A$ is at 70% utilization for serving traffic from the content provider, and 30% of the outbound traffic on Service Provider$_A$ is the outbound traffic destined for a client in the 10.0.0.0/8 prefix, while the remaining 40% of the outbound traffic on Service Provider$_A$ is traffic from the content provider that is destined for other clients. Thus, in this example. Decision Maker Module 404 may decide, depending on its control parameters, that outbound traffic for prefix 10.0.0.0/8 should be shifted to Service Provider$_B$'s link.

This decision is transmitted to BGP Speaker Module 403, which has a full current table, identical to that of the content provider's router 305. Thus, BGP Speaker Module 403 currently "knows" from the current routing table of router 305 that prefix 10.0.0.0/8 has a next-hop attribute of NextHopIPServiceProvider$_A$ and a local preference of 100; and it also knows from the routing table of router 305 that the prefix 10.0.0.0/8 has a next hop attribute of NextHopIPServiceProvider$_B$ and a local preference of 80. According to the BGP routing decision algorithm, the higher local preference route is preferred. Thus, Service Provider$_A$ is currently preferred over Service Provider$_B$ for routing traffic for prefix 10.0.0.0/8. Because Decision Maker Module 404 has determined that outbound traffic for prefix 10.0.0.0/8 should be shifted to Service Provider$_B$'s link in this example, BGP Speaker Module 403 reverses the local preference attribute of the prefix 10.0.0.0/8 using BGP. Accordingly, the following steps occur: (a) a prefix announcement update for 10.0.0.0/8 is sent to content provider router 305 with a next hop attribute set to NextHopIPServiceProvider$_B$; (b) content provider router 305 is configured to assign higher local preference to prefix 10.0.0.0/8, as announced by the BGP Speaker Module 403; and (c) content provider router 305 has two route choices for prefix 10.0.0.0/8 (the higher preference setting in this example means that it will choose Service Provider$_B$ unless that link is down for some reason); the prefix announced by BGP Speaker 403 is identical to Service Provider$_B$, except that it has a higher local preference and will thus become the preferred route.

Per-Prefix Utilization Data Collector 401 may perform calculation of AS transit and terminating data flow volumes, as described more fully in co-pending and commonly assigned U.S. Patent Application Serial Number 2003/0120769 titled "METHOD AND SYSTEM FOR DETERMINING AUTONOMOUS SYSTEM TRANSIT VOLUMES."

Routing information base data, including at least one prefix and at least one selected AS path, is obtained by Per-Prefix Utilization Data Collector 401 from the routers of each service provider of content provider 302 (e.g., routers 306 and 307 of Service Provider$_A$ and Service Provider$_B$, respectively). For instance, the total utilization of each service provider may be determined by prefix, and thus the total amount of utilization of each service provider, as well as the amount of utilization of each service provider in serving egress traffic from the content provider to a destination having a common prefix (e.g., prefix 10.0.0.0/8 in the above examples) may be determined. As described further in U.S. Patent Application Serial Number 2003/0120769, the routing information base data may be correlated with corresponding data flow information. The correlation may be performed in order to compute data traffic volumes for a plurality of autonomous system (AS) numbers, such as the corresponding AS numbers for Service Provider$_A$ and Service Providers of FIGURES 3 and 4. Per-Prefix Utilization Data Collector 401 may aggregate and calculate the traffic volumes of various network transit providers (e.g., Service Provider$_A$ and Service Provider$_B$) and then provide information (e.g., to Decision Maker Module 404 about how much traffic transits or terminates at particular ASs.

The data flow statistics are correlated with routing information base data by finding which selected route in the routing information base data a given traffic flow traversed. Using an AS path listed for a selected route, a counter is incremented by the size of the data flow for each AS listed in the selected route. A set of counters, which represent data traffic that transited or terminated at each AS, results. The counters can then be combined based on network providers represented by each AS number (e.g., Service Provider$_A$ and Service Provider$_B$). A report is created from the combined counters, which describes how much data traffic transited or terminated at a particular provider's network. Such report is communicated to Decision Maker Module 404.

Further, router interface utilization data may be collected by module 402 and used by Decision Maker Module 404 in determining whether to re-balance the egress traffic from content provider 302 among its plurality of service providers. For instance, Router Interface Utilization Data Collector 402 may periodically poll content provider router(s) 305 using, for example, an SNMP query to determine the amount that the interfaces of content provider router(s) 305 are being utilized for routing data to each of Service Provider$_A$ and Service Provider$_B$. For instance, the amount of utilization of the interface of content provider router(s) 305 with Service Provider$_A$ router 306 is determined, and the amount of utilization of the interface of content provider router(s) 305 with Service Provider$_B$ router 306 is determined. From analysis of this data, Decision Maker Module 404 can determine the amount (or volume) of egress traffic from content provider 302 that is being routed to each of its service providers.

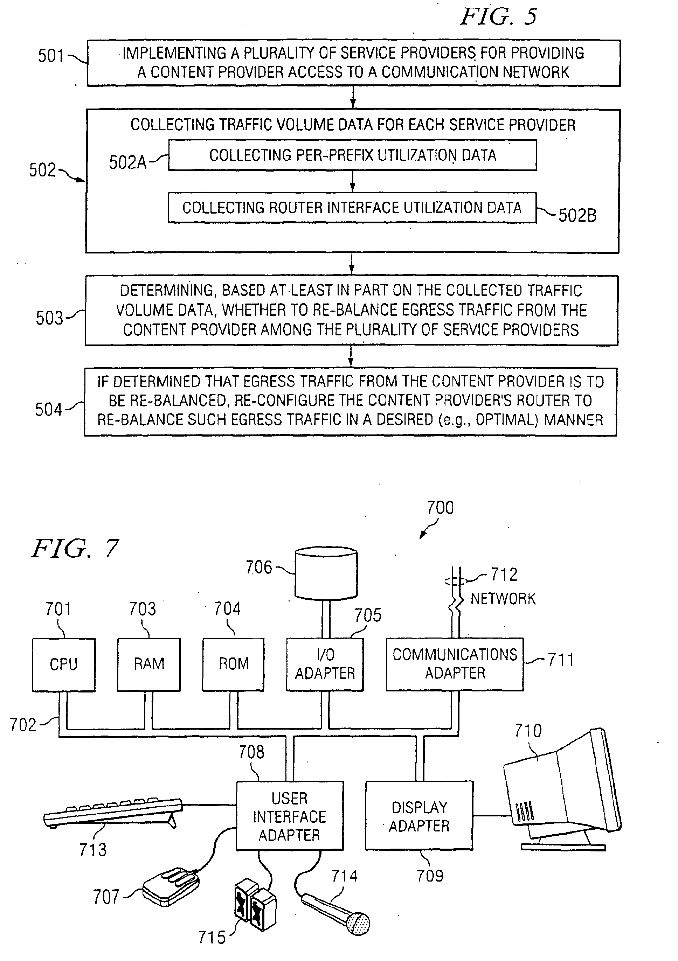

Turning to FIGURE 5, an example flow diagram of an embodiment of the present invention for managing allocation of egress traffic from a content provider between a plurality of its service providers is shown. In operational block 501, a plurality of service providers, such as Service Provider$_A$ and Service Provider$_B$ of FIGURES 3 and 4, are implemented for providing a content provider 302 access to a communication network 301. In block 502, traffic volume data is collected for each service provider. For instance, per-prefix utilization data may be collected (e.g., by Per-Prefix Utilization Data Collector 401) in operational block 502A, and router interface utilization data may be collected (e.g., by Router Interface Utilization Data Collector 402) in operational block 502B.

In operational block 503, Decision Maker Module 404 determines, based at least in part on the collected traffic volume data, whether to re-balance egress traffic from the content provider 302 among the plurality of service providers. As described further herein, such determination may be made based on control parameters set at the Decision Maker Module 404. And, if Decision Maker Module 404 determines that the egress traffic from the content provider 302 is to be re-balanced, it triggers re-configuration of the routing table of the content provider's router(s) 305 (e.g., via BGP Speaker 403) to re-balance the content provider's egress traffic in a desired (e.g., optimal) manner in operational block 504. For instance, the routing table of content provider router(s) 305 may be re-configured to specify that egress traffic for certain prefix(es) (e.g., those associated with content provider 302) have a locally preferred route of one of the content provider's service providers that can optimally service such egress traffic. For example, from an analysis of the collected traffic volume data, Decision Maker Module 404 may determine that Service Provider$_A$ has a much greater load than Service Provider$_B$ and that Service Provider$_B$ may therefore be capable of better serving the content provider's egress traffic, and thus the Decision Maker Module 404 may trigger the re-configuration of content provider router(s) 305 to establish a preference for routing the content provider's egress traffic to Service Provider$_B$.

While the example flow of FIGURE 5 is shown as sequential operations, this may not actually be the case in an implementation. For instance, in certain implementation traffic volume data may be collected continuously and it may be analyzed periodically (e.g., at some configured internal). Thus, for instance, operation may loop from block 504 back to block 503 periodically to analyze newly collected traffic volume data (from block 502).

An example mathematical model for describing a technique for optimizing the balance of egress traffic flow from a content provider 302 between Service Provider$_A$ and Service Provider$_B$ in accordance with one embodiment of the present invention is provided below. Assume that at a given'location on the Internet is specified to which a set of prefixes $S(t) = \{1,...,k(t)\}$ are to be routed. Let $S^1 = S^1(t)$ and $S^2 = S^2(t)$ be two subsets of $S$ and $L(S^1)$, $L(S^2)$ traffic volumes related to the corresponding links. For instance, $L(S^1)$ is a traffic volume for Service Provider$_A$ and $L(S^2)$ is the traffic volume for Service Providers. Thus, the following equalities exist: $S = S^1 \cup S^2$ and $L(S) = L(S^1)+L(S^2)$.

A balancing activity of any kind, regardless of its goal can be described as an evolution of subsets $S^1$ and $S^2$, which results in the traffic reallocation between the links. Every step in this evolution can be defined as $S^1$ and $S^2$ content change. A limited version of this definition is used hereafter, i.e., new states of $S^1$ and $S^2$ are identified by transferring a subset $s^1 \subset S^1$ to $S^2$ or vice-versa:

$$\text{next } S^1 = S^1 \setminus s^1, \text{ next } S^2 = S^2 \cup s^1$$

or

$$\text{next } S^1 = S^1 \cup s^2, \text{ next } S^2 = S^2 \setminus s^2$$

Since the balancing activity is iterative, the expression shows how to compute the next subsets of prefixes $S^1$ and $S^2$ for links $L_1$ and $L_2$ such that traffic for some prefix $s$ is routed either to $L_1$ or $L_2$ depending upon whether $s$ is in set $S_1$ or $S_2$. The next iteration of sets $S^1$ and $S^2$ is computed by either:

(a) removing some subset $s^1$ from $S^1$ and adding that same subset (e.g., an operator may get the parameter to specify $s^2$ from $S^2$; or.

(b) adding some subset $s^2$ to $S^1$ and removing that same subset $s^2$ from $S^2$.

Criteria for selecting subsets $s^1$, $s^2$ may be determined by an objective function, such as a decision rule implemented on Decision Maker Module 404. As an example of such a decision rule that may be implemented, let $L(t)$ be the total outgoing traffic load at a given router. Further, assume that $L_1(t, A)$ and $L_2(t, A)$ represent the total traffic over the links of Service ProviderA and Service ProviderB, respectively, that results from applying certain *control A* from the class of available *controls A* at time $t$ (i.e., a control parameter "control A" is implemented on Decision Maker Module 404). Class A, in this example, is the class of all finite strings of positive real numbers. Each string is interpreted as a sequence of time intervals between consecutive control actions. For example, A = (15.5, 8.3, 13.01) means that a total of three control actions have been carried out. The first has been taken 15.5 time units (e.g., seconds, minutes, hours, etc.) after "start", the second 8.3 time units after the first, and the third 13.01 time units after the second. Accordingly, it should be recognized that

$$L(t) = L_1(t, A) + L_2(t, A).$$

It is assumed there are constrains on the links' load instantaneous values:

$$L_1(t, A) \leq C_1$$

$$L_2(t, A) \leq C_2$$

That is, it is assumed that each link has a given capacity for supporting loads, assumed at some instant in time.

To achieve a certain goal in load balancing a control is defined in terms of observed/measured traffic volumes. More specifically, moment of the next control action $T_{i+1}$ should be calculated based on the prior traffic pattern. It is sufficient, therefore, to define $\tau_{i+1}$ as a function of prior traffic volumes over the two links of Service Provider$_A$ and Service Provider$_B$. Let A = $(\tau_1,...,\tau_k)$ be a control so that $T_i = \tau_1 + ... + \tau_i$ is the elapsed time until $i$-th control action, and let $L_1^i (T_i + t)$, $L_2^i (T_i + t)$, $0 \leq l \leq \tau_{i+1}$ be load values over the corresponding links 1 (Service Provider$_A$) and 2 (Service Provider$_B$) after a *control* action at $T_i$ and prior to $T_{i+1}$. The moment of $i+1$ control action is defined recursively: $T_{i+1} = T_i + \tau_{i+1}$, where

$$\tau_{i+1} = \min\{\min\{t : L_1^i(T_i + t) > C_1 - \varepsilon_1\}, \min\{t : L_2^i(T_i + t) > C_2 - \varepsilon_2\}\} \tag{1}$$

and $\varepsilon_1, \varepsilon_2$, are safety margins, i.e., the next control action must occur when one of the traffic volumes exceeds the safety threshold at the first time after the previous control action. Schema (1) above can accommodate controls, where moments of control actions depend also on derivatives of the traffic volumes, e.g., the decision by Decision Maker Module 404 may be made based not only on instant traffic values but the velocity of its change as well.

When a decision rule is introduced it modifies the original traffic $L_1 (t), L_2 (t)$ into $L_1 (t, A)$ and $L_2 (t, A)$, which

can be defined as:

$$L_j(t,A) = \begin{cases} L_j^1(t) & 0 \le t \le T_1 \\ \bullet & \bullet \\ \bullet & \bullet & j = 1,2 \\ \bullet & \bullet \\ L_j^i(t) & T_{i-1} \le t \le T_i \end{cases}$$

An objective function should reflect a user perception of the relative importance of different factors associated with the traffic load balancing for the "optimal" link utilization. Such factors associated with traffic load balancing may include, as examples: overflows, frequency of control actions, and disturbance of current traffic in terms of the number of redirected prefixes. Additional factors of interest can be treated similarly.

There are at least two ways to deal with the corresponding optimization problem when there are multiple objectives. One is to select one of these factors as objective and optimize it against constraints on the rest. Another is to introduce a function that depends on all factors, e.g., a weighted sum of "partial objectives", each stemmed from the corresponding factor, and then to search for the optimal value of this "global" objective. Either techniques of optimization may be utilized in embodiments of the present invention.

If, for example, the amount of overflow is accumulated over a given period (0,T) of time, then the partial objective can be expressed as follows:

$$F(T,A) = \int_0^T \left( D_1(t) + D_2(t) \right) dt ,$$

where deviations $D_j(t)$ are defined as:

$$D_j(t) = \begin{cases} 0 & L_j(t,A) \le C_j \\ L_j(t,A) - C_j & L_j(t,A) > C_j \end{cases}$$

The frequency $q(\Delta)$ of control actions over an arbitrary period of time $\Delta$ is equal to $\#\{i : T_i \varepsilon \Delta\}/\Delta$. A factor Q related to this characteristic is, for example, the highest value of $q(\Delta)$: $Q = \max\{q(\Delta):\Delta\varepsilon(0,T)\}$.

The third factor comes from necessity to reallocate some amount of traffic between the links. In this case, it is useful to keep disturbance of the system at the possibly low level by selecting the smallest prefix subset size, whose corresponding traffic volume is feasible to complete a control action.

One formulation of the optimization problem, which may be used by Decision Maker Module 404 in certain embodiments, is: Find min $F(T, A)$ over a certain set of A's, under constraints:

$$Q < a$$

*Cardinality*(a) < b

Every control action (i+1), to be specific, determines two objects: 1) Time interval $\tau_{i+1}$ after the preceding control action, and 2) subset $s \subset S$ of prefixes, whose corresponding traffic must be redirected.

Time interval $\tau_{i+1}$ is specified recursively by equation (1) above. Algorithms to address the two objects for each control action may be based on historical data about the amount of traffic generated by every prefix and, therefore, by every subset $s$ of prefixes from $S$.

While BGP is used in the above examples of an embodiment of the present invention, it should be understood by those having ordinary skill in the art that embodiments of the present invention are not intended to be so limited, and thus certain embodiments can be practiced in implementations that depart from BGP. Further, while the above example technique focuses on a scenario for optimally balancing egress traffic load from content provider 302 between two service provider links for ease of explanation, it should be understood by those of ordinary skill in the art that such technique may be readily expanded for determining an optimal balance between any number of service provider links.

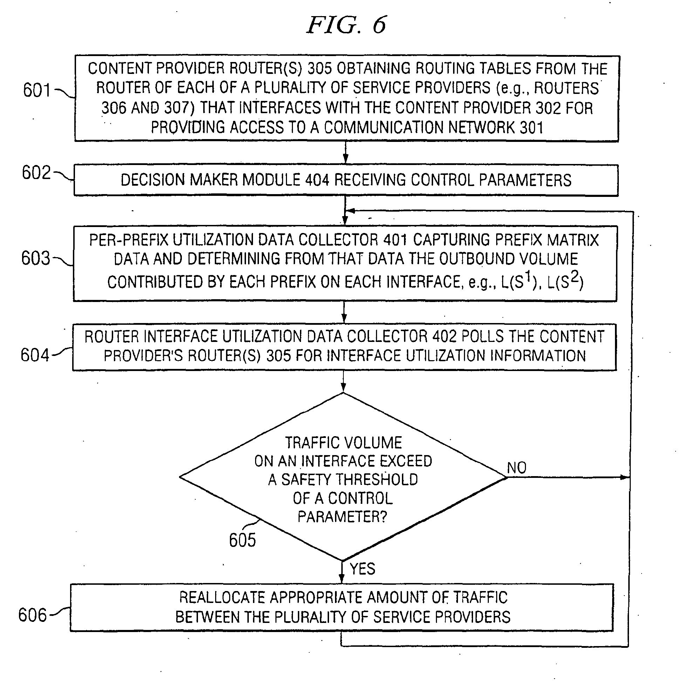

Turning to FIGURE 6, an example operational flow diagram for egress traffic manager 304 in accordance with one embodiment of the present invention is shown. In operational block 601, content provider router(s) 305 obtain routing tables from the router of each of a plurality of Service Providers that interfaces with content provider 302 for providing access to communication network 301. For instance, in the example of FIGURES 3 and 4, content provider router(s) 305 obtain routing tables from routers 306 and 307, which are the routers for interfacing content provider 302 with Service Provider$_A$ and Service Provider$_B$, respectively. In operational block 602, Decision Maker Module 404 receives control parameters that specify, for example, conditions (e.g., thresholds) under which egress traffic is to be reallocated between the content provider's service providers.

In operational block 603, Per-Prefix Utilization Data Collector 401 captures prefix matrix data and determines from that data the outbound volume contributed by each prefix on each interface. That is, Per-Prefix Utilization Data Collector 401 determines $L(S^1)$ and $L(S^2)$. In block 604, Router Interface Utilization Data Collector 402 polls the content provider's router(s) 305 for interface utilization information. For instance, Router Interface Utilization Data Collector 402 may poll content provider router(s) 305 using, for example, an SNMP query to determine the amount that the interfaces of content provider router(s) 305 are being utilized for routing data to each of Service Provider$_A$ and Service Provider$_B$. For instance, the amount of utilization of the interface of content provider router(s) 305 with Service Provider$_A$ router 306 is determined, and the amount of utilization of the interface of content provider router(s) 305 with Service Provider$_B$ router 306 is determined.

The determined data from Per-Prefix Utilization Data Collector 401 and Router Interface Utilization Data Collector 402 is provided to Decision Maker Module 404, and in block 605 Decision Maker Module 404 analyzes the received data to determine whether the traffic volume on an interface of content provider router(s) 305 exceeds a safety threshold of a control parameter. As described above, in certain embodiments, the decision of whether to invoke a "control action" for reallocating a portion of the traffic from one of the service providers to another of the service providers may be based not only on the determined volume of outbound traffic on an interface but also on the rate at which such volume of outbound traffic is increasing or decreasing on such interface. As also described above; the management algorithm implemented on Decision Maker Module 404 may, in certain embodiments, control egress traffic load balancing between a plurality of service providers based on the following constraints: (a) per-link utilization rate, (b) prefix link switching frequency, and (c) number of switched prefixes (i.e., number of prefixes having its egress link changed for reallocation of such traffic to a different service provider). The per-link utilization rate may be determined by the Router Interface Utilization Data Collector 402. The prefix link switching frequency may be determined by Decision Maker module 404 based upon prior decisions (e.g. how often it has determined it needs to route traffic for a given prefix via a different service provider). The prefix link switching frequency may, in some implementations, be a configurable parameter (e.g., an operator may set the parameter to specify "don't switch routes for a prefix more than N times per day"). Per-Prefix Utilization data collector 402 knows the total number of prefixes of traffic that has been routed, while BGP speaker 403 knows the total number of possible prefixes.

If, based on the set control parameters, the Decision Maker Module 404 determines that some amount of the content provider's egress traffic should be reallocated to a different service provider (e.g., because a safety threshold established by a control parameter for a service provider is exceeded), operation advances to block 606 whereat an appropriate amount of the content provider's egress traffic is reallocated from one service provider to another. More specifically, Decision Maker Module 404 triggers BGP Speaker 403 to re-configure the routing table of content provider router(s) 305 such that egress traffic for a certain prefix has a local preference for being routed to a different service provider. Thereafter, operation returns to block 603 to periodically repeat the data collection and analysis steps of blocks 603-606. If the Decision Maker Module 404 determines at block 605 that reallocation of the content provider's egress traffic is unnecessary (e.g., because a safety threshold established by a control parameter for a service provider is not exceeded), operation returns to block 603 to periodically repeat the data collection and analysis steps of blocks 603-606. If, from time to time, a user desires to change the control parameters on Decision Maker Module 404, such parameters may be so modified (e.g., by causing operation to return to operational block 602).

When implemented via computer-executable instructions, various elements of the egress traffic manager of embodiments of the present invention are in essence the software code defining the operations thereof. The executable instructions or software code may be obtained from a readable medium (e.g., a hard drive media, optical media, EPROM, EEPROM, tape media, cartridge media, flash memory, ROM, memory stick, and/or the like) or communicated via a data signal from a communication medium (e.g., the Internet). In fact, readable media can include any medium that can store or transfer information.

FIGURE 7 illustrates an example computer system 700 adapted according to an embodiment of the present invention to implement an egress traffic manager as described above. That is, computer system 700 comprises an example system on-which embodiments of the present invention may be implemented, including modules 401-404 of the example egress traffic manager of FIGURE 4. Central processing unit (CPU) 701 is coupled to system bus 702. CPU 701 may be any general purpose CPU, and the present invention is not restricted by the architecture of CPU 701 as long as CPU 701 supports the inventive operations as described herein. CPU 701 may execute the various logical instructions according to embodiments of the present invention. For example, CPU 701 may execute machine-level instructions according to the operational examples described above with FIGURES 5 and 6.

Computer system 700 also preferably includes random access memory (RAM) 703, which may be SRAM, DRAM, SDRAM, or the like. Computer system 700 preferably includes read-only memory (ROM) 704 which may be PROM, EPROM, EEPROM, or the like. RAM 703 and ROM 704 hold user and system data and programs, as is well known in the art, such as data associated with modules 401-404 of the example egress traffic manager of FIGURE 4.

Computer system 700 also preferably includes input/output (I/O) adapter 705, communications adapter 711, user interface adapter 708, and display adapter 709. I/O adapter 705, user interface adapter 708, and/or communications adapter 711 may, in certain embodiments, enable a user to interact with computer system 700 in order to input information, such as control parameters for Decision Maker Module 404 of FIGURE 4.

I/O adapter 705 preferably connects to storage device(s) 706, such as one or more of hard drive, compact disc (CD) drive, floppy disk drive, tape drive, etc. to computer system 700. The storage devices may be utilized when RAM 703 is insufficient for the memory requirements associated with storing data for the egress traffic manager. Communications adapter 711 is preferably adapted to couple computer system 700 to network 712 (e.g., to a plurality of different service providers via content provider router(s) 305). User interface adapter 708 couples user input devices, such as keyboard 713, pointing device 707, and microphone 714 and/or output devices, such as speaker(s) 715 to computer system 700. Display adapter 709 is driven by CPU 701 to control the display on display device 710 to, for example, display a user interface (e.g., for receiving input information from a user and/or to output information regarding the balancing of egress traffic between a plurality of different service providers).

It shall be appreciated that the present invention is not limited to the architecture of system 700. For example, any suitable processor-based device may be utilized, including without limitation personal computers, laptop computers, computer workstations, and multi-processor servers. Moreover, embodiments of the present invention may be implemented on application specific integrated circuits (ASICs) or very large scale integrated (VLSI) circuits. In fact, persons of ordinary skill in the art may utilize any number of suitable structures capable of executing logical operations according to the embodiments of the present invention.

Although the present invention and its advantages have been described in detail, it should be understood that various changes, substitutions and alterations can be made herein without departing from the invention as defined by the appended claims. Moreover, the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

**Claims**

1. A system comprising:

   a content provider 302 communicatively coupled to a plurality of service providers that provide access to a communication network 301; and
   an egress traffic manager 304 operable to determine, based at least in part on traffic volume of each of the plurality of service providers, an optimal balance of the content provider's egress traffic to be routed to each of the plurality of service providers.

2. The system of claim 1 further comprises:

   at least one router 305 for routing the content provider's egress traffic to the plurality of service providers.

3. The system of claim 2 wherein the egress traffic manager is operable to update the at least one router to achieve said optimal balance.

4. The system of claim 3 wherein the egress traffic manager is operable to update a routing table 202B of the at least one router.

5. The system of claim 1 wherein the egress traffic manager comprises:

at least one data collector module 401, 402 operable to collect data reflecting said traffic volume.

**6.** A method comprising:

using 501 a plurality of service providers for providing a content provider 302 access to a communication network 301, wherein the content provider communicates its egress traffic to clients via the plurality of service providers;

collecting 502 traffic volume data for each service provider; and

determining 503, based at least in part on the collected traffic volume data, whether to change an allocation of egress traffic from the content provider among the plurality of service providers.

**7.** The method of claim 6 further comprising:

if determined to change the allocation, re-configuring 504 at least one router 305 that routes the egress traffic from the content provider to the service providers such that the egress traffic is allocated among the plurality of service providers in a desired manner.

**8.** An egress traffic manager 304 comprising:

at least one data collector module 401, 402 for collecting data reflecting volume of egress traffic routed by at least one router 305 from a content provider 302 to each of a plurality of service providers that provide access to a communication network 301; and

a decision maker module 404 for determining, based at least in part on the collected data, whether a routing strategy of the at least one router should be updated to change the allocation of the egress traffic among the plurality of service providers.

**9.** The egress traffic manager of claim 8 wherein the at least one data collector module comprises:

router interface utilization data collector module 402 for collecting interface utilization data reflecting traffic volume for each interface of the at least one router that routes the content provider's egress traffic from the content provider to the plurality of service providers; and

per prefix utilization data collector module 401 operable for collecting per prefix utilization data reflecting traffic volume for each prefix to which the content provider's egress traffic is destined.

**10.** A method comprising:

implementing at least one content provider router 305 or routing egress traffic from a content provider 302, said at least one content provider router having at least one interface to each of a plurality of service providers that provide the content provider access to a communication network 301, wherein said at least one content provider router includes a routing table 202B from which it determines which of the plurality of service providers to route the content provider's egress traffic;

monitoring the volume of egress traffic directed from the at least one content provider router to each of the plurality of service providers;

determining 605 whether the volume of egress traffic from said at least one content provider router to any one of the plurality of service providers exceeds a corresponding threshold; and

if determined that the volume of egress traffic to one of the plurality of service providers exceeds its corresponding threshold, updating 606 the routing table of said at least content provider router to reallocate the content provider's egress traffic between the plurality of service providers.

*FIG. 1*
*(PRIOR ART)*

*FIG. 2*
*(PRIOR ART)*

## FIG. 3

## FIG. 4

*FIG. 5*

501 — IMPLEMENTING A PLURALITY OF SERVICE PROVIDERS FOR PROVIDING A CONTENT PROVIDER ACCESS TO A COMMUNICATION NETWORK

502 — COLLECTING TRAFFIC VOLUME DATA FOR EACH SERVICE PROVIDER

502A — COLLECTING PER-PREFIX UTILIZATION DATA

COLLECTING ROUTER INTERFACE UTILIZATION DATA — 502B

503 — DETERMINING, BASED AT LEAST IN PART ON THE COLLECTED TRAFFIC VOLUME DATA, WHETHER TO RE-BALANCE EGRESS TRAFFIC FROM THE CONTENT PROVIDER AMONG THE PLURALITY OF SERVICE PROVIDERS

504 — IF DETERMINED THAT EGRESS TRAFFIC FROM THE CONTENT PROVIDER IS TO BE RE-BALANCED, RE-CONFIGURE THE CONTENT PROVIDER'S ROUTER TO RE-BALANCE SUCH EGRESS TRAFFIC IN A DESIRED (e.g., OPTIMAL) MANNER

700

*FIG. 7*

706

712 NETWORK

701 CPU

703 RAM

704 ROM

705 I/O ADAPTER

COMMUNICATIONS ADAPTER — 711

702

708 USER INTERFACE ADAPTER

DISPLAY ADAPTER

710

713

707

715

714

709

## FIG. 6

601 — CONTENT PROVIDER ROUTER(S) 305 OBTAINING ROUTING TABLES FROM THE ROUTER OF EACH OF A PLURALITY OF SERVICE PROVIDERS (e.g., ROUTERS 306 AND 307) THAT INTERFACES WITH THE CONTENT PROVIDER 302 FOR PROVIDING ACCESS TO A COMMUNICATION NETWORK 301

602 — DECISION MAKER MODULE 404 RECEIVING CONTROL PARAMETERS

603 — PER-PREFIX UTILIZATION DATA COLLECTOR 401 CAPTURING PREFIX MATRIX DATA AND DETERMINING FROM THAT DATA THE OUTBOUND VOLUME CONTRIBUTED BY EACH PREFIX ON EACH INTERFACE, e.g., $L(S^1)$, $L(S^2)$

604 — ROUTER INTERFACE UTILIZATION DATA COLLECTOR 402 POLLS THE CONTENT PROVIDER'S ROUTER(S) 305 FOR INTERFACE UTILIZATION INFORMATION

605 — TRAFFIC VOLUME ON AN INTERFACE EXCEED A SAFETY THRESHOLD OF A CONTROL PARAMETER?

NO

YES

606 — REALLOCATE APPROPRIATE AMOUNT OF TRAFFIC BETWEEN THE PLURALITY OF SERVICE PROVIDERS

| | European Patent Office | EUROPEAN SEARCH REPORT | Application Number EP 04 25 5222 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 02/33895 A (FINN SEAN P ; KARAM MANSOUR J (US); LLOYD MICHAEL A (US); MADAN HERBER) 25 April 2002 (2002-04-25) <br> * abstract * <br> * page 2, line 14 - page 3, line 2 * <br> * page 5, line 1 - page 50, line 9 * <br> * figures 1-6 * <br> ----- | 1-10 | H04L29/06 <br> H04L12/56 |
| X | WO 02/33916 A (ROUTESCIENCE TECHNOLOGIES INC ; FINN SEAN P (US); LEDDY JOHN G (US); L) 25 April 2002 (2002-04-25) <br> * abstract * <br> * page 1, line 8 - page 7, line 2 * <br> * page 7, line 17 - page 20, line 6 * <br> * figures 1-3 * <br> ----- | 1-10 | |
| A | BONAVENTURE O., QUOITIN B.: "Common utilizations of the BGP community attribute , draft-bonaventure-quoitin-bgp-communities-00.txt" <br> INTERNET DRAFT, 1 June 2003 (2003-06-01), XP015000322 <br> IETF <br> * the whole document * <br> ----- | 1-10 | TECHNICAL FIELDS SEARCHED (Int.Cl.7) <br> H04L |

The present search report has been drawn up for all claims

| Place of search | Date of completion of the search | Examiner |
|---|---|---|
| Munich | 19 October 2004 | Körbler, G |

EPO FORM 1503 03.82 (P04C01)

### ANNEX TO THE EUROPEAN SEARCH REPORT
### ON EUROPEAN PATENT APPLICATION NO.

EP 04 25 5222

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2004

| Patent document cited in search report | Publication date | Patent family member(s) | Publication date |
|---|---|---|---|
| WO 0233895 A | 25-04-2002 | US 2002184393 A1 | 05-12-2002 |
| | | US 2002075813 A1 | 20-06-2002 |
| | | US 2002078223 A1 | 20-06-2002 |
| | | US 2002129161 A1 | 12-09-2002 |
| | | AU 1151902 A | 29-04-2002 |
| | | AU 1177502 A | 29-04-2002 |
| | | AU 1177702 A | 29-04-2002 |
| | | AU 1328702 A | 29-04-2002 |
| | | AU 1335302 A | 29-04-2002 |
| | | AU 9499301 A | 29-04-2002 |
| | | AU 9670701 A | 29-04-2002 |
| | | CA 2424654 A1 | 25-04-2002 |
| | | CA 2424675 A1 | 25-04-2002 |
| | | CA 2424680 A1 | 25-04-2002 |
| | | EP 1327324 A2 | 16-07-2003 |
| | | EP 1350363 A2 | 08-10-2003 |
| | | EP 1356634 A2 | 29-10-2003 |
| | | WO 0233915 A1 | 25-04-2002 |
| | | WO 0233916 A1 | 25-04-2002 |
| | | WO 0233892 A2 | 25-04-2002 |
| | | WO 0233894 A2 | 25-04-2002 |
| | | WO 0233895 A2 | 25-04-2002 |
| | | WO 0233896 A2 | 25-04-2002 |
| | | WO 0233893 A2 | 25-04-2002 |
| WO 0233916 A | 25-04-2002 | US 2002184393 A1 | 05-12-2002 |
| | | AU 1177502 A | 29-04-2002 |
| | | AU 1177702 A | 29-04-2002 |
| | | AU 1328702 A | 29-04-2002 |
| | | AU 1335302 A | 29-04-2002 |
| | | AU 9499301 A | 29-04-2002 |
| | | AU 9670701 A | 29-04-2002 |
| | | CA 2424675 A1 | 25-04-2002 |
| | | CA 2424680 A1 | 25-04-2002 |
| | | EP 1350363 A2 | 08-10-2003 |
| | | EP 1356634 A2 | 29-10-2003 |
| | | WO 0233915 A1 | 25-04-2002 |
| | | WO 0233916 A1 | 25-04-2002 |
| | | WO 0233893 A2 | 25-04-2002 |
| | | WO 0233894 A2 | 25-04-2002 |
| | | WO 0233895 A2 | 25-04-2002 |
| | | WO 0233896 A2 | 25-04-2002 |
| | | AU 1151902 A | 29-04-2002 |
| | | CA 2424654 A1 | 25-04-2002 |
| | | EP 1327324 A2 | 16-07-2003 |
| | | WO 0233892 A2 | 25-04-2002 |

EPO FORM P0459

For more details about this annex : see Official Journal of the European Patent Office, No. 12/82

**EP 1 519 533 A1**

## ANNEX TO THE EUROPEAN SEARCH REPORT
## ON EUROPEAN PATENT APPLICATION NO.

EP 04 25 5222

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2004

| Patent document cited in search report | Publication date | Patent family member(s) | Publication date |
|---|---|---|---|
| WO 0233916 A | | US 2002129161 A1<br>US 2002078223 A1<br>US 2002075813 A1 | 12-09-2002<br>20-06-2002<br>20-06-2002 |

EPO FORM P0459

For more details about this annex : see Official Journal of the European Patent Office, No. 12/82

21